# EUROPÄISCHE PATENTSCHRIFT

(11) **EP 2 058 187 B1**
(45) Veröffentlichungstag und Bekanntmachung des Hinweises auf die Patenterteilung: **30.11.2011**
(21) Anmeldenummer: 08168055.5
(22) Anmeldetag: 31.10.2008
(51) Int. Cl.: B60T 7/20, B60T 13/68, B60T 13/26, B60G 17/056

(54) **Feststellbremsventil für eine Steueranlage für Kraftfahrzeug- Anhänger mit Betriebsbremse, Feststellbremse und Luftfederung**
Handbrake for a control system for vehicle trailers with operating brake, handbrake and air suspension
Soupape de frein de stationnement pour une installation de commande pour remorques de véhicules automobiles dotées d'un frein de stationnement, frein de stationnement et ressort à air

(30) Priorität: 12.11.2007 DE 102007053767
(43) Veröffentlichungstag der Anmeldung: 13.05.2009
(73) Patentinhaber: Haldex Brake Products GmbH, 69123 Heidelberg (DE)
(72) Erfinder: Sulzyc, Georg, 68535, Edingen-Neckarhausen (DE)
(74) Vertreter: Rehberg Hüppe + Partner

(56) Entgegenhaltungen:
- US-A1- 2006 244 225
- US-B1- 6 412 789
- US-B1- 6 679 509

## Beschreibung

### TECHNISCHES GEBIET DER ERFINDUNG

Die Erfindung betrifft ein Feststellbremsventil für eine Steueranlage für Kraftfahrzeug-Anhänger mit einer Betriebsbremszylinder aufweisenden Betriebsbremse, einer Federspeicherbremszylinder aufweisenden Feststellbremse und einer Luftfederbälge aufweisenden Luftfederung. Das Feststellbremsventil weist ein Gehäuse auf, in dem ein Schieber gleitend und dichtend angeordnet ist. Der Schieber weist einen aus dem Gehäuse herausgeführten Handknopf auf, über den der Schieber manuell wahlweise in eine Belüftungsstellung oder eine Entlüftungsstellung der Federspeicherbremszylinder der Feststellbremse verschiebbar ist.

Luftgefederte Anhänger verfügen außer den mit Druckluft versorgten Luftfederbälgen üblicherweise auch über eine Betriebsbremse und eine Hilfsbremse. Die Betriebsbremse arbeitet mit einem Steuerventil, welches beispielsweise als EBS-Einheit ausgebildet ist, und verfügt über Betriebsbremszylinder. Die Feststellbremse besitzt üblicherweise ein Feststellbremsventil, mit dem bei manueller Betätigung Feststellbremszylinder-Einheiten, vorwiegend in der Form von separaten oder kombinierten Federspeicherbremszylindern, betätigt werden können.

An einem abgestellten Anhänger ergibt sich oft aufgrund von Undichtigkeiten in der pneumatischen Anlage die Notwendigkeit, die gesamte Anlage vor Beginn einer Fahrt mit Druckluft aufzufüllen und in einen betriebsbereiten Zustand zu versetzen. Dies geschieht in aller Regel über einen Lastkraftwagen, also ein Zugfahrzeug, welches mit einem Kompressor und einer entsprechenden Luftaufbereitungsanlage ausgestattet ist. Der Anhänger wird über die Vorratsleitung mit Druckluft versorgt. Für Anhänger, die über eine Betriebsbremse, eine Feststellbremse und eine Luftfederung verfügen, ist es wesentlich, dass die Betriebsbremse zunächst in einen fahrbereiten Zustand überführt wird, also aufgefüllt wird. Dies zielt darauf ab, auf jeden Fall sicherzustellen, dass nach dem Anfahren eine Betriebsbremsung möglich ist. Auch der Hilfs- oder Feststellbremse wird eine gewisse Bedeutung eingeräumt, so dass das Lösen der Feststellbremse durch Beaufschlagung der Federspeicherbremszylinder erst dann möglich ist, wenn der betreffende Teil der Anlage mit Druckluft versorgt ist. Ist dies der Fall, kann die Hilfsbremse gelöst werden, so dass das Fahrzeug hinweggefahren werden kann. Der dritte Teil der pneumatischen Anlage ist in der Luftfederung zu sehen. Auch dieser Teil der Anlage muss in einen betriebsbereiten Zustand versetzt werden, in welchem das Fahrgestell des Anhängers entsprechend der Beladung angehoben ist. Bei den bekannten Anhängern besteht die Möglichkeit, dass nach dem Erreichen des betriebsbereiten Zustandes der Betriebsbremse und der Hilfsbremse die Möglichkeit gegeben ist, den Anhänger mit dem Zugfahrzeug bereits hinwegzufahren, ohne dass das Fahrgestell des Anhängers mit Druckluft versorgt in die Fahrposition angehoben ist. Das Fahrgestell liegt vielmehr noch auf vorgesehenen Anschlägen auf und befindet sich damit auf einem niedrigeren Niveau als beabsichtigt. Bei diesem niedrigeren Niveau besteht die Möglichkeit, dass die Kotflügel des Anhängers mit den Reifenflanken der Räder in Kontakt kommen und dort einschneiden, so dass die Reifen zumindest beschädigt werden. Oft verfügt die Bremsanlage eines Anhängers über ein achslastabhängig gesteuertes Ventil, welches den in den Bremszylindern anzuwendenden Bremsdruck beeinflusst. Wenn ein Anhänger ohne Betriebsbereitschaft der Luftfederung hinweggefahren wird, ist in der zu den Luftfederbälgen führenden Leitung noch kein oder ein zu geringer Druck vorhanden. Dieser Druck beeinflusst dann das ALB-Ventil, welches insoweit nicht beladungsabhängig angesteuert wird. Dem hat man dadurch entgegengewirkt, dass ALB-Ventile mit einer Notfalleinstellung versehen wurden. Aber auch eine solche Notfalleinstellung stimmt in den seltensten Fällen mit dem tatsächlichen Beladungszustand des Anhängers überein, so dass die Bremsanlage mit unzutreffenden Signalen versorgt wird.

### STAND DER TECHNIK

Aus der EP 0 520 147 B1 ist eine Steueranlage zum willkürlichen Heben und Senken des Fahrzeugsaufbaus von luftgefederten Fahrzeugen mit Niveauregelung bekannt. Obwohl in dieser Druckschrift nur die Luftfederung dargestellt und beschrieben ist, versteht es sich, dass ein solches Fahrzeug auch eine Betriebsbremse und eine Feststellbremse aufweist. Es ist ein gesonderter Luftbehälter für die Luftfederung vorgesehen, dem ein Überströmventil ohne Rückströmung vorgeschaltet ist. Über diese Zweigleitung wird die Luftfederung mit Druckluft versorgt.

Aus der DE 199 28 113 C1 ist ein Anhängerbremsventil für den Einbau in Druckluftbremsanlagen von Anhängern mit ABS- und ALB-Steuerung bekannt. Hier ist das Anhängerbremsventil sowie die zugehörige Betriebsbremsanlage mit den Betriebsbremszylindern im Einzelnen dargestellt und verdeutlicht.

Die EP 0 792 783 B1 bzw. die DE 697 05 978 T2 zeigt eine Steueranlage für Kraftfahrzeug-Anhänger mit einer Betriebsbremszylinder aufweisenden Betriebsbremse und einer Federspeicherbremszylinder aufweisenden Feststellbremse. Eine Luftfederung ist nicht vorgesehen. In der Steueranlage befindet sich auch ein manuell betätigbares Feststellbremsventil, welches in Schieberbauart konstruiert ist. Der über den Handknopf betätigbare Schieber weist eine Einschnürung auf, über die Leitungsverbindungen hergestellt werden können. Damit ist es möglich, in der einen Stellung die zu den Federspeicherbremszylindern führende Leitung zu entlüften und in der anderen Stellung zu belüften. Die Schieberbauart beinhaltet kein Ventil.

Aus der DE 602 08 804 T2 ist eine Druckluftverarbeitungsvorrichtung bekannt, die Druckluft von einem Kompressor erhält und an verschiedene Anlagenteile weitergibt. So besitzt die Druckluftverarbeitungsvorrichtung einen Auslass für die Speisung der Betriebsbremsanlage und einen Auslass für die Speisung einer Feststellbremsanlage (Parkbremse). Ähnlich können auch andere Systeme mit Druckluft versorgt werden, z. B. eine Luftfederanlage. Die Betätigungsorgane der verschiedenen Anlagen, z. B. ein Feststellbremsventil, sind als außerhalb der Druckluftverarbeitungsvorrichtung angeordnete Organe angedeutet, wie sie für eine Betätigung erforderlich sind. Ein Feststellbremsventil ist weder dargestellt noch beschrieben.

Aus der EP 1 500 531 A1 ist ein Anhängerbremsventil mit integrierter Ansteuerung der Luftfederung bekannt. Aus der DE 101 43 888 A1 oder aus der US2006/0244225 A1 ist eine Ventileinrichtung zur wahlweisen Regelung des Bremsdrucks einer Betriebsbremse und des Drucks in Luftfederbälgen bekannt.

### AUFGABE DER ERFINDUNG

Der Erfindung liegt die Aufgabe zugrunde, ein Feststellbremsventil zu schaffen welches in einer Steueranlage für Kraftfahrzeuganhänger benutzt werden kann und welches sicherstellt, dass das Lösen der Feststellbremse erst dann erfolgen kann, wenn sich die Luftfederanlage in betriebsbereitem Zustand befindet.

### LÖSUNG

Erfindungsgemäß wird dies bei einem Feststellbremsventil der eingangs beschriebenen Art dadurch erreicht, dass das Feststellbremsventil in der zu den Federspeicherbremszylindern führenden Leitung ein Durchlassventil aufweist, das vom Druck in der zu den Luftfederbälgen führenden Leitung der Luftfederung von einer Schließstellung in eine Durchgangsstellung schaltbar ist. Das Durchlassventil verhindert den Druckaufbau in den Federspeicherbremszylindern und damit das Lösen derselben solange bis in der zu den Luftfederbälgen führenden Leitung der Luftfederung ein Druckwert überschritten ist, der sicherstellt, dass sich die Luftfederung in betriebsbereitem Zustand befindet und sich das Fahrgestell des Anhängers auf der vorgesehenen Normallage befindet. Damit ist die Gewähr dafür gegeben, dass die Feststellbremse erst dann gelöst werden kann, wenn zuvor die Luftfederung ordnungsgemäß befüllt worden ist. In Folge der Befüllung ist das Niveauregelventil in der Lage, die Luftfederbälge mit Druckluft zu versorgen, um so den Fahrzeugaufbau entsprechend der jeweiligen Beladung in einen betriebsbereiten Zustand unter Erreichung des vorgesehenen Höhenniveaus zu überführen, bevor der Anhänger nach dem Lösen der Feststellbremse hinweg gefahren werden kann. Damit wird nicht nur erreicht, dass eine Beschädigung der Reifenflanken durch die Kotflügel ausgeschlossen wird. Hinzu kommt noch, dass das in der zu den Luftfederbälgen führenden Leitung ein dem Beladungszustand entsprechender Druck vorherrscht, über den dann auch das ALB-Ventil beeinflusst wird, so dass bei jeder Betriebsbremsung ein an den Beladungszustand angepasster Bremsdruck ausgesteuert wird. Gleichwohl lässt das Feststellbremsventil auch eine manuelle Betätigung zu, beispielsweise dann, wenn der Anhänger in abgestelltem Zustand bewegt werden soll.

### BESCHREIBUNG DER ERFINDUNG

Das Durchlassventil wird vom Druck in der zu den Luftfederbälgen führenden Leitung der Luftfederung geschaltet. Bei relativ niedrigem Druck verbleibt es in der Schließstellung. Erst wenn der Druckaufbau in der Luftfederanlage das ordnungsgemäß vorgesehene Niveau erreicht hat, überführt dieser Druck den Ventilkörper des Durchlassventils von der Schließstellung in eine Durchgangsstellung. Es besteht dann Durchgang zu den Federspeicherbremszylindern, so dass sich der entsprechende Lösedruck auswirken kann.

Das Feststellbremsventil kann eine Notbremseinheit mit einem vom Druck in der Vorratsleitung beaufschlagten und auf einer Speicherfeder abgestützten Notbremskolben aufweisen. Damit führt ein Bruch in der Vorratsleitung oder das Entstehen eines entsprechend großen Lecks in der Vorratsleitung dazu, dass eine Notbremsung eingeleitet wird, indem der Notbremskolben entlüftet wird und damit die Speicherfeder den Schieber im Feststellbremsventil so verschieben kann, dass die Federspeicherbremszylinder entlüftet werden. Eine solche Notbremswirkung ist erwünscht, wenn der Anhänger abgekuppelt und auch die Vorratsleitung drucklos wird. Es können aber auch Leckagen auftreten, die zu einem sich über längere Zeit erstreckenden Druckverlust führen. Wenn dies Leckagen eine Größenordnung erreichen, dass die Notbremseinheit einen Hub ausführt, wird sich während der Fahrt unerwünschter Weise eine entsprechende Bremswirkung über die Feststellbremse ergeben. Um dies auszuschließen, kann in der Verbindungsleitung zwischen der Vorratsleitung und dem Notbremskolben ein Magnetventil vorgesehen sein, welches eine Durchgangsstellung und eine Sperrstellung aufweist. Dieses Magnetventil kann elektrisch von einem EBS-Steuergerät schaltbar sein, um z. B. während der Fahrt sicherzustellen, dass in dem beschriebenen Defektfall eine Bremswirkung über die Feststellbremse vermieden wird.

Insbesondere kann ein das Durchlassventil überbrückendes Rückschlagventil vorgesehen sein, das einen Druckausgleich in der zu den Federspeicherbremszylindern führenden Leitung ermöglicht. Dieser Druckausgleich ist sinnvoll, wenn in der zu den Federspeicherbremszylindem führenden Leitung eine Leckage auftritt.

Für die konstruktive Ausbildung des Durchlassventils ergeben sich verschiedene Möglichkeiten. So kann in dem mit dem Handknopf verbundenen Schieber ein auf einer Feder abgestützter Schaltkolben vorgesehen sein, dessen Wirkfläche vom Druck in der zu den Luftfederbälgen führenden Leitung der Luftfederung beaufschlag ist. Mit der Kraft der Feder wird eine Kraftschwelle festgelegt; deren Überschreitung zu einem Umschalten des Durchlassventils in die Durchlassstellung führt, so dass ein Druckaufbau in den Federspeicherbremszylindern und das Lösen der Feststellbremse damit ermöglicht wird.

Das Durchlassventil kann vorzugsweise in dem Schieber angeordnet sein, wobei der Schieber den Sitz des Durchlassventils trägt. Der Ventilkörper des Durchlassventils, der mit dem Schaltkolben verbunden ist, ist in dem Schieber gleitend und dichtend gelagert.

Der vom Druck in der zu den Luftfederbälgen führenden Leitung der Luftfederung beaufschlagte Schaltkolben weist eine Kolbenstange auf, die durch den Sitz des Durchlassventils hindurchgeführt ist und den Ventilkörper des Durchlassventils trägt. Diese Kolbenstange ist hohl ausgebildet, so dass ein Entlüftungskanal für den Druckabbau in den Federspeicherbremszylindern gebildet wird. Auf Diese Weise weist die Kolbenstange eine Leitung zur Überbrückung des Durchlassventils auf. In dieser Leitung ist ein den Druckausgleich ermöglichendes Rückschlagventil vorgesehen.

Der Schieber kann auf seiner der Notbremseinheit zugekehrten Seite einen Fortsatz aufweisen, auf dem der Notbremskolben gleitend und dichtend geführt ist und der einen mit den Notbremskolben zusammenwirkenden Anschlag trägt. Der Fortsatz kann zu Entlüftungszwecken hohl ausgebildet sein, um auf diese Art und Weise den Speicherraum zu entlüften.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform des Feststellbremsventils eingeschaltet in eine Steueranlage für einen Kraftfahrzeuganhänger, und zwar in drucklosem Zustand in Parkstellung.
- **Fig. 2**: zeigt das Feststellbremsventil 1 in der Steueranlage gemäß Fig. 1, jedoch in einer anderen Stellung, bei aufgefüllter Betriebsbremsanlage, betriebsbereitem Zustand der Luftfederung und gelöster Feststellbremse.
- **Fig. 3**: zeigt das Feststellbremsventil 1 in etwas modifizierter Form und eingeschaltet in eine modifizierte Steueranlage, mit aufgefüllter Vorratsleitung während des Druckanstiegs und vor Erreichen des Druckniveaus, welches einem ordnungs- gemäßen Befüllen der Luftfederung entspricht.
- **Fig. 4**: zeigt eine weitere Ausführungsform des Feststellbremsventils.

### FIGURENBESCHREIBUNG

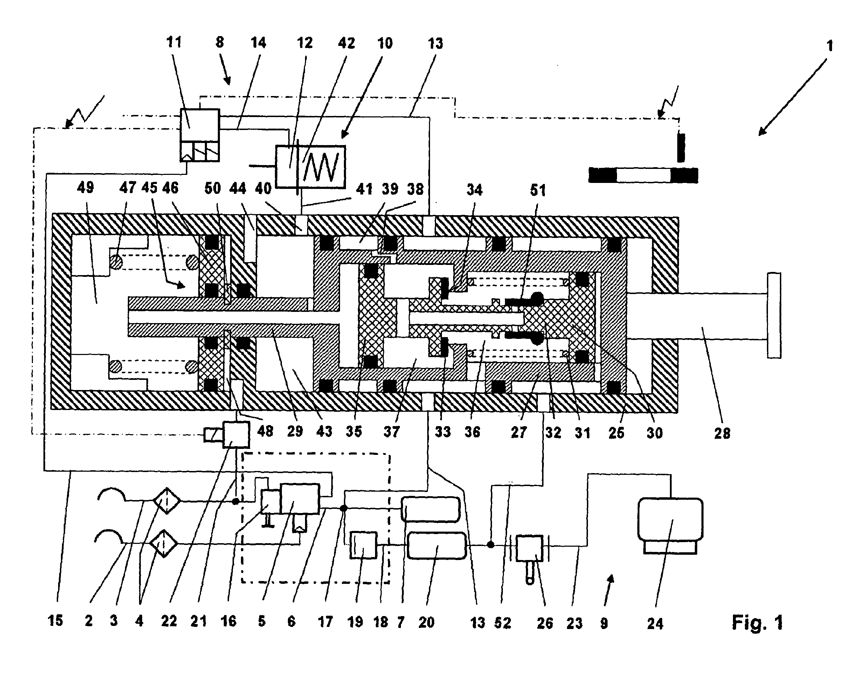

Das in **Fig. 1** dargestellte Feststellbremsventil 1 ist in eine Steueranlage für einen Kraftfahrzeuganhänger eingeschaltet. Die Steueranlage weist, wie üblich eine Bremsleitung 2 und eine Vorratsleitung 3 auf, die beide mit entsprechenden Kupplungsköpfen schematisch verdeutlicht sind. Sowohl in der Bremsleitung 2 wie auch in der Vorratsleitung 3 können Filterelemente 4 vorgesehen sein. Die Bremsleitung 2 wie auch die Vorratsleitung 3 ist jeweils zu einem Anhängerbremsventil 5 (mit Relaiswirkung) geführt, wobei die Bremsleitung 2 als pneumatische Steuerleitung für die Ansteuerung des Anhängerbremsventils ausgebildet ist. Die über die Vorratsleitung 3 und das Anhängerbremsventil 5, in welchem ein Rückschlagventil verwirklicht sein kann, geführte Vorratsluft, gelangt über eine Leitung 6 in einen Vorratsbehälter 7. Nach diesem Vorratsbehälter 7 ist eine Aufteilung der luftmäßigen Versorgung vorgenommen, und zwar für eine Betriebsbremse 8, eine Luftfilterung 9 und eine Feststellbremse 10. Von der Betriebsbremse 8 sind als wesentliche Elemente ein EBS-Steuergerät 11 (mit Relaiswirkung) und ein Betriebsbremszylinder 12 verdeutlicht. Das EBS-Steuergerät 11 wird mit Vorratsluft aus dem Vorratsbehälter 7 über eine Leitung 13 versorgt, die hier durch das Feststellbremsventil 1 hindurchgeführt ist. Eine Leitung 14 verbindet das EBS-Steuergerät 11 mit dem Betriebsbremszylinder 12. Von dem Anhängerbremsventil 5 führt eine Leitung 15 als Steuerleitung zu dem EBS-Steuergerät 11, wobei hier die pneumatische Ansteuerung der Betriebsbremse initiiert wird. Es versteht sich, dass das EBS-Steuergerät auch elektrisch ansteuerbar bzw. mit Signalen Verbindbar ist. Dies ist nur schematisch angedeutet.

Mit dem Vorratsbehälter 7 steht über die Leitung 6 ein Verzweigungspunkt 17 in Verbindung, von dem ausgehend die Luftfederung 9 einerseits und die Feststellbremse 10 andererseits abzweigen. So führt von dem Verzweigungspunkt 17 eine Leitung 18, in der ein Überströmventil 19 (ohne Rückströmung) angeordnet ist, zu einem Vorratsbehälter 20, der der Druckluftversorgung der Luftfederung 9 dient. Das Überströmventil 19 kann als solches ein Überströmventil ohne Rückströmung sein, was dazu führt, dass alle übergeströmte Luft der Luftfilterung 9 zugute kommt. Andererseits ist es aber auch möglich, das Überströmventil 19 als Überströmventil mit begrenzter Rückströmung auszubilden, um einen Teil der Luft auch für die Versorgung der Betriebsbremse über die Leitung 13 nutzen zu können. Von dem Vorratsbehälter 20 zweigt eine Leitung 23 ab, die zu Luftfederbälgen 24 führt, von denen der Einfachheit halber nur einer dargestellt ist. In der Leitung 23 ist auch ein Niveauregelventil 26 vorgesehen. Das Niveauregelventil 26 dient wie üblich der Aufrechterhaltung eines bestimmungsgemäßen Abstands zwischen dem Fahrzeugaufbau und den Achsen und ist damit zur Be- und Entlüftung der Luftfederbälge 24 ausgebildet. Das Niveauregelventil 26 nimmt bei Einnahme der vorbestimmten Höhe des Fahrzeugaufbaus eine Abschlussstellung ein, in der sein Einlassventil und sein Auslassventil beide gleichzeitig geschlossen sind. Wesentliche Elemente der Luftfederung 9 sind damit das Niveauregelventil 26 sowie die Luftfederbälge 24.

Dem Anhängersteuerventil 5 kann ein Löseventil 16 vorgeschaltet sein, welches manuell betätigbar ist. Von der Leitung 23 zweigt eine Leitung 52 ab, die zu dem Feststellbremsventil 1 führt. Von der Vorratsleitung 3 zweigt eine Verbindungsleitung 21 ab, die zu dem Feststellbremsventil 1 führt. In der Verbindungsleitung 21 ist ein Magnetventil 22 angeordnet. Das Magnetventil 22 weist eine Durchgangsstellung und eine Sperrstellung für die Verbindungsleitung 21 auf. Es wird elektrisch von der EBS-Steuereinheit 11 geschaltet. Das Magnetventil 22 kann auch in Fortfall kommen.

Das Feststellbremsventil 1 weist ein Gehäuse 25 auf, in welchem ein Schieber 27 gleitend und dichtend geführt ist. Der Schieber 27 besitzt einen aus dem Gehäuse 25 herausgeführten Handknopf 28, der der manuellen Betätigung dient. An dem anderen Ende besitzt der Schieber 27 einen Fortsatz 29, der zu Entlüftungszwecken hohl ausgebildet ist. In dem Schieber 27 ist ein Steuerkolben 30 gleitend und dichtend geführt, dessen Wirkfläche über die Leitung 38 mit dem im Vorratsbehälter 20 der Luftfederung 9 herrschenden Druck beaufschlagt ist. Der Steuerkolben 30 ist auf einer Feder 31 abgestützt. Mit dem Steuerkolben 30 ist eine Kolbenstange 32 verbunden, die einen Ventilkörper 33 trägt. Der Ventilkörper 33 arbeitet mit einem Ventilsitz 34 zusammen, der innen in dem Schieber 27 gebildet ist. Der Ventilsitz 34 bildet mit dem Ventilkörper 33 ein Durchlassventil 33, 34, welches bei niedrigem Druck im Vorratsbehälter 20 die Schließstellung einnimmt, während es durch Überschreiten einer Druckschwelle und entsprechende Einwirkung dieses Druckes auf die Wirkfläche des Steuerkolbens 30 in die Öffnungsstellung übergeht. Um diese Öffnungsstellung beizubehalten ist der Steuerkolben 30 mit einem Haltekolben 35 ausgestattet, der eine entsprechend größere Wirkfläche zur Verfügung stellt. Die Leitung 13 führt in einen Raum 36 vor dem Durchlassventil 33, 34. Der Raum 37 nach dem Durchlassventil 33, 34, der durch den Haltekolben 35 begrenzt wird, steht über einen Kanal 38 mit einem Ringraum 39 in Verbindung. Der Ringraum 39 wird zwischen zwei Dichtungen des Schiebers 27 gebildet. Die eine Dichtung ist so angeordnet, dass sie eine Anschlussbohrung 40 überfahren kann. Von der Anschlussbohrung 40 zweigt eine Leitung 41 ab, die zu Federspeicherbremszylindern 42 führt. Die Leitung 41 stellt auch die Verlängerung der Leitung 13 dar, d. h. die Feststellbremse 10 wird über die Leitungen 13 und 41 mit Druckluft versorgt. Andererseits hat in drucklosem Zustand die Anschlussbohrung 40 Verbindung zu einem Raum 43, der dauerhaft mit einer Entlüftung 44 in die Atmosphäre versehen ist. Der Fortsatz 29 ist hohl ausgebildet und hat einen Anschluss an den Rückraum des Haltekolbens 35, so dass dieser ebenso über den Raum 43 und die Entlüftung 44 entlüftet wird.

Das Feststellbremsventil 1 kann mit einer Notbremseinheit 45 ausgestattet sein. Die Notbremseinheit 45 weist einen Notbremskolben 46 auf, der auf einer Speicherfeder 47 abgestützt ist. Der Notbremskolben 46 begrenzt einen Wirkraum 48, der über die Verbindungsleitung 21 Verbindung zu der Vorratsleitung 3 hat. Der Federraum 49, in dem die Speicherfeder 47 vorgesehen ist, ist über den hohlen Fortsatz 29 ebenfalls an die Entlüftung 44 angeschlossen. Der Notbremskolben 46 bzw. die Kraft der Speicherfeder 47 arbeitet mit einem Anschlag 50 zusammen, der auf dem Fortsatz 29 des Schiebers 27 angeordnet ist.

Die Notbremseinheit 45 an dem Feststellbremsventil 1 kann auch fehlen.

Fig. 1 zeigt eine Stellung des Feststellbremsventils in drucklosem Zustand bei geparktem Anhänger. Sowohl die Vorratsleitung 3 wie auch die Bremsleitung 2 sind entlüftet. Der Notbremskolben 46 hat den Schieber 27 in die gezeigte Stellung verschoben, so dass der Federspeicherbremszylinders 42 entlüftet ist. Die Feststellbremse ist damit eingelegt.

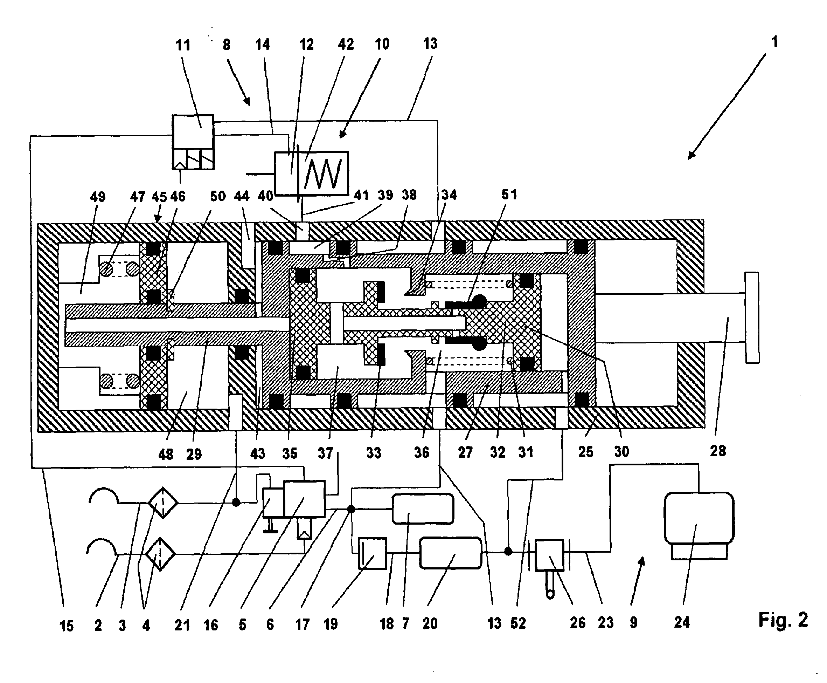

Beim Auffüllen der Vorratsleitung 3 aus der Parkstellung heraus gelangt zunächst Vorratsluft von der Vorratsleitung 3 über die Verbindungsleitung 21 in den Wirkraum 48, so dass der Notbremskolben 46 unter Zusammendrückung der Speicherfeder 47 nach links verschoben wird. Der Schieber 27 verbleibt jedoch in der in Fig. 1 gezeigten Stellung. Der Druck in der Vorratsleitung 3 und nachfolgend in der Leitung 6 zum Vorratsbehälter 7 hat zunächst das Überströmventil 19 noch nicht geöffnet, so dass im Vorratsbehälter 20 kein Druckaufbau stattfindet. Erst nach dem Öffnen des Überströmventils 19 findet ein Druckaufbau statt, der anfänglich noch nicht so groß ist, dass der Steuerkolben 30 verschoben werden könnte. Erst bei weiterem Druckaufbau und überschreiten einer Druckschwelle, die eine betriebsbereite Versorgung der Luftfederung 9 repräsentiert, gelangt das Niveauregelventil 26 in die Lage, dass es den Aufbau des Fahrzeuges durch entsprechende Belüftung der Luftfederbälge 24 auf die vorgesehene Höhe anhebt. Mit Überschreiben dieser Druckschwelle verschiebt sich auch der Steuerkolben 30, so dass das Durchlassventil 33, 34 geöffnet wird. Vorher wurde der Schieber 27 über eine manuelle Betätigung des Handknopfes 28 in seine linke Endstellung verschoben, so dass die Federspeicherbremszylinder 42 von einer Entlüftung abgeschnitten sind. Gleichzeitig wird damit eine Verbindung zwischen dem Ringraum 39 und der Anschlussbohrung 40 hergestellt, so dass bei dem nachfolgenden Öffnen des Durchlassventils 33, 34 die Stellung der Teile des Feststellbremsventils 1 erreicht wird, die in **Fig. 2** dargestellt ist. Das Durchlassventil 33, 34 verbleibt in der Offenstellung und die Federspeicherbremszylinder 42 sind gelöst. Dies entspricht auch der Fahrstellung.

Wenn nach Beendigung der Fahrt der Anhänger in die Parkstellung gelangen soll, wird zunächst der Schieber 27 manuell in die Stellung verbracht, die in Fig. 1 dargestellt ist. Dabei ist jedoch in Folge des einwirkenden Druckes der Luftfederung das Durchlassventil 33, 34 noch geöffnet, was allerdings bezüglich der Federspeicherbremszylinder 42 keine Auswirkung haben kann. Die Federspeicherbremszylinder 42 sind vielmehr über die Entlüftung 44 entlüftet.

Wird nun die Vorratsleitung 3 abgekuppelt so fällt hier der Druck auch in der Verbindungsleitung 21, so dass die Notbremseinheit 45 ihre Funktion erfüllen kann. Die Speicherfeder wird sich ausdehnen. Dies führt allerdings nicht zu einer Änderung der ohnehin bereits gelösten Federspeicherbremse.

Wird der Druck in der Betriebsbremsanlage 8 niedriger als im Federspeicherbremszylinder 42, erfolgt ein Druckausgleich über ein Rückschlagventil 51.

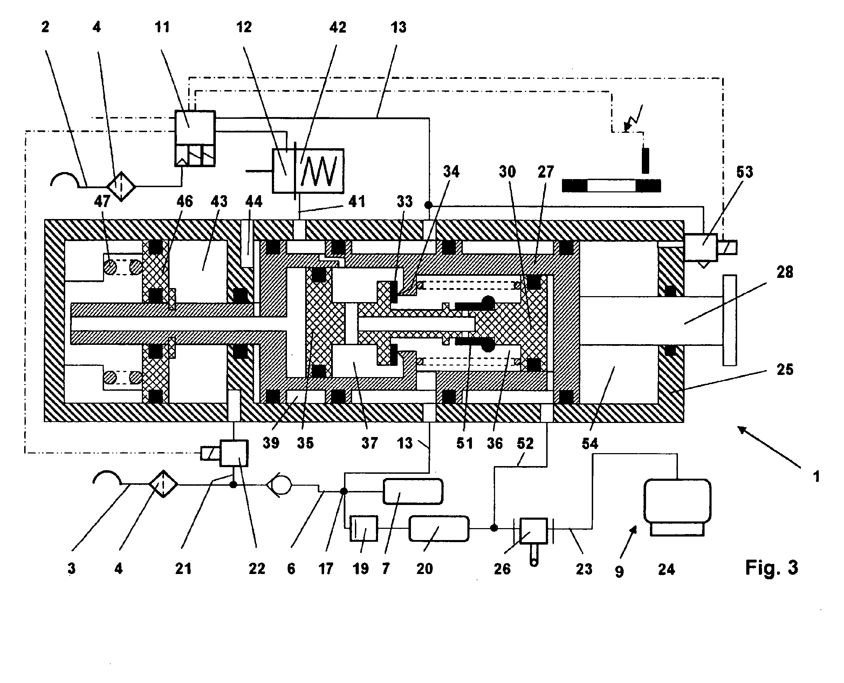

Die in **Fig. 3** dargestellte Ausführungsform des Feststellbremsventils 1 entspricht in weiten Bereichen der Ausführungsform der Fig. 1 und 2, so dass hierauf verwiesen werden kann. Zusätzlich zu seiner Handbetätigung über den Handknopf 28 kann hier jedoch das Feststellbremsventil 1 auch über ein Magnetventil 53 elektrisch betätigt werden. Die Betätigung erfolgt über eine elektrische Signalleitung, die von dem EBS-Steuergerät 11 herangeführt sein kann. Im Gehäuse 25 des Feststellbremsventils 1 ist ein Wirkraum 54 gebildet, der über das Magnetventil 53 belüftet bzw. entlüftet werden kann. Damit ergibt sich die Möglichkeit, den Schieber 27 auch elektrisch in die dargestellte Stellung zu verschieben.

Fig. 3 zeigt eine Stellung, in der die Vorratsleitung 3 aufgefüllt ist. Über das Magnetventil 53 ist der Schieber 27 so verschoben, dass die Entlüftung der Federspeicherbremszylinder 42 beendet ist. Allerdings ist in Fig. 3 ein Zustand dargestellt, bei dem der Druckaufbau in der Luftfederung 9 noch nicht hinreichend ist, um das Durchlassventil 33, 34 zu öffnen. Insoweit ist die Feststellbremse 10 noch eingelegt.

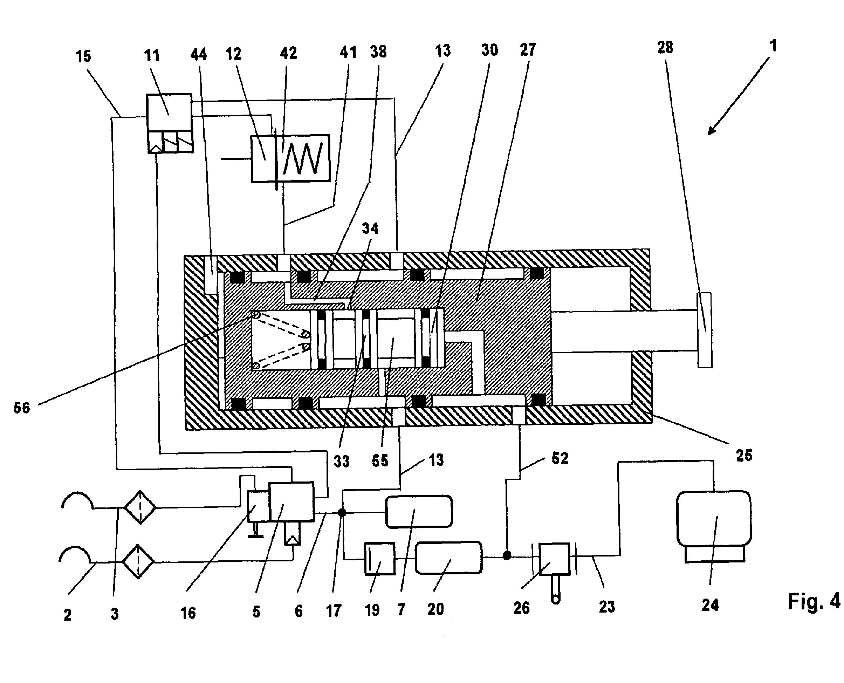

**Fig. 4** zeigt eine weitere Ausführungsform des Feststellbremsventils 1 und verdeutlicht generell, dass die Notbremseinheit 45 auch in Fortfall kommen kann. Das Durchlassventil 33, 34 ist hier in Schieberbauart verwirklicht. Es ist ein Schieber 55 vorgesehen, der einen Ventilkörper 33 in Form einer Dichtung bildet, die einen Ventilsitz 34 in Form eines Kanals 38 überfahren kann. Der Schieber 55 ist auf einer Feder 56 abgestützt. Sein Steuerkolben 30 wird auch hier über die Leitung 52 beaufschlagt. Der besondere Vorteil dieser Schieberbauart des Durchlassventils 33, 34 liegt darin, dass es auf einem sehr kleinen Durchmesser realisiert.werden kann, so dass letztlich auch das Gehäuse 25 des Feststellbremsventils 1 einen kleinen Durchmesser und damit eine sehr kleine Baugröße erhält.

### BEZUGSZEICHENLISTE

- 1: Feststellbremsventil
- 2: Bremsleitung
- 3: Vorratsleitung
- 4: Filterelement
- 5: Anhängerbremsventil
- 6: Leitung
- 7: Vorratsbehälter
- 8: Betriebsbremse
- 9: Luftfederung
- 10: Feststellbremse
- 11: EBS-Steuergerät
- 12: Betriebsbremszylinder
- 13: Leitung
- 14: Leitung
- 15: Leitung
- 16: Löseventil
- 17: Verzweigungspunkt
- 18: Leitung
- 19: Überströmventil
- 20: Vorratsbehälter
- 21: Verbindungsleitung
- 22: Magnetventil
- 23: Leitung
- 24: Luftfederbalg
- 25: Gehäuse
- 26: Niveauregelventil
- 27: Schieber
- 28: Handknopf
- 29: Fortsatz
- 30: Steuerkolben
- 31: Feder
- 32: Kolbenstange
- 33: Ventilkörper
- 34: Ventilsitz
- 35: Haltekolben
- 36: Raum
- 37: Raum
- 38: Kanal
- 39: Ringraum
- 40: Anschlussbohrung
- 41: Leitung
- 42: Federspeicherbremszylinder
- 43: Raum
- 44: Entlüftung
- 45: Notbremseinheit
- 46: Notbremskolben
- 47: Speicherfeder
- 48: Wirkraum
- 49: Federraum
- 50: Anschlag
- 51: Rückschlagventil
- 52: Leitung
- 53: Magnetventil
- 54: Wirkraum
- 55: Schieber
- 56: Feder

## Patentansprüche

1. Feststellbremsventil (1) für eine Steueranlage für Kraftfahrzeug-Anhänger mit einer Betriebsbremszylinder (12) aufweisenden Betriebsbremse (8), einer Federspeicherbremszylinder (42) aufweisenden Feststellbremse (10) und einer Luftfederbälge (24) aufweisenden Luftfederung (9), mit einem Gehäuse (25), in dem ein Schieber (27) gleitend und dichtend geführt angeordnet ist, der einen aus dem Gehäuse (25) herausgeführten Handknopf (28) aufweist, über den der Schieber (27) manuell wahlweise in eine Belüftungsstellung oder eine Entlüftungsstellung der Federspeicherbremszylinder (42) der Feststellbremse (10) verschiebbar ist, **dadurch gekennzeichnet, dass** das Feststellbremsventil (1) in der zu den Federspeicherbremszylindern (42) führenden Leitung (13, 41) ein Durchlassventil (33, 34) aufweist, das vom Druck in der zu den Luftfederbälgen (24) führenden Leitung (23) der Luftfederung (9) von einer Schließstellung in eine Durchgangsstellung schaltbar ist.

2. Feststellbremsventil (1) nach Anspruch 1, **dadurch gekennzeichnet, dass** das Feststellbremsventil (1) eine Notbremseinheit (45) mit einem vom Druck in der Vorratsleitung (3) beaufschlagten und auf einer Speicherfeder (47) abgestützten Notbremskolben (46) aufweist.

3. Feststellbremsventil (1) nach Anspruch 2, **dadurch gekennzeichnet, dass** in einer Verbindungsleitung (21) zwischen der Vorratsleitung (3) und dem Notbremskolben (46) ein Magnetventil (22) anordenor ist, das eine Durchgangs- und eine Sperrstellung aufweist.

4. Feststellbremsventil (1) nach mindestens einem der Ansprüche 1 bis 3, **dadurch gekennzeichnet, dass** ein das Durchlassventil (33, 34) überbrückendes Rückschlagventil (51) vorgesehen ist, das einen Druckausgleich in der zu den Federspeicherbremszylindern (42) führenden Leitung (41) ermöglicht.

5. Feststellbremsventil (1) nach mindestens einem der Ansprüche 1 bis 4, **dadurch gekennzeichnet, dass** in dem mit dem Handknopf (28) verbundenen Schieber (27) ein auf einer Feder (31) abgestützter Schaltkolben (30) vorgesehen ist, dessen Wirkfläche vom Druck in der zu den Luftfederbälgen (24) führenden Leitung (23) der Luftfederung (9) beaufschlagt ist.

6. Feststellbremsventil (1) nach mindestens einem der Ansprüche 1 bis 5, **dadurch gekennzeichnet, dass** das Durchlassventil (33, 34) in dem Schieber (27) angeordnet ist und der Schieber (27) den Ventilsitz (34) des Durchlassventils (33, 34) trägt, und dass der Ventilkörper (33) des Durchlassventils (33, 34) in dem Schieber (27) gleitend und dichtend gelagert ist.

7. Feststellbremsventil (1) nach mindestens einem der Ansprüche 1 bis 6, **dadurch gekennzeichnet, dass** der vom Druck in der zu den Luftfederbälgen (24) führenden Leitung (23) der Luftfederung (9) beaufschlagte Schaltkolben (30) eine Kolbenstange (32) aufweist, die durch den Ventilsitz (34) des Durchlassventils (33, 34) hindurchgeführt ist und den Ventilkörper (9) des Durchlassventils (33, 34) trägt.

8. Feststellbremsventil (1) nach mindestens einem der Ansprüche 1 bis 7, **dadurch gekennzeichnet, dass** die Kolbenstange (32) eine Leitung zur Überbrückung des Durchlassventils (33, 34) aufweist, in der ein den Druckausgleich ermöglichendes Rückschlagventil (51) angeordnet ist.

9. Feststellbremsventil (1) nach mindestens einem der Ansprüche 1 bis 8, **dadurch gekennzeichnet, dass** der Schieber (27) auf seiner der Notbremseinheit (45) zugekehrten Seite einen Fortsatz (29) aufweist, auf dem der Notbremskolben (46) gleitend und dichtend geführt ist und der einen mit dem Notbremskolben (46) zusammenwirkenden Anschlag (50) trägt.

10. Feststellbremsventil (1) nach mindestens einem der Ansprüche 1 bis 9, **dadurch gekennzeichnet, dass** der Fortsatz (29) zu Entlüftungszwecken hohl ausgebildet ist.

## Claims

1. Parking brake valve (1) for a control device for a trailer of a vehicle comprising a service brake (8) having a service brake cylinder (12), a parking brake (10) having a spring brake cylinder (42), an air suspension (9) having air suspension bellows (27) and a housing (27), wherein a sliding valve element is guided for a sliding movement and sealed, said sliding valve element (27) comprising a manual bottom or handle (28) located outside from the housing (25), wherein by means of the manual bottom or handle (28) the sliding valve element (27) is optionally manually movable into an aerating position or a de-aerating position for the spring brake cylinder (42) of the parking brake (10), **characterized by** the parking brake valve (1) comprising a opening valve (33, 34) located in a line (13, 41) leading to the spring brake cylinders (42), wherein the opening valve (33, 34) is switchable by a pressure in the line (23) of the air suspension (9) leading to the air suspensions bellows (24) from a closed position into an open position.

2. Parking brake valve (1) of claim 1, wherein the parking brake valve (1) comprises an emergency brake unit (45) having an emergency brake piston (46) which is biased by pressure in an supply line (3) and supported or biased by a spring (47).

3. Parking brake valve (1) of claim 2, wherein it is possible to locate a solenoid valve (22) in a connecting line (21) between the supply line (3) and the emergency brake piston (46), wherein the solenoid valve (22) comprises an open position and a closed position.

4. Parking brake valve (1) of one of claims 1 to 3, wherein a check valve (51) bypassing the opening valve (33, 34) is provided and the check valve (51) provides the option of a pressure balance in the line leading to the spring brake cylinders (42).

5. Parking brake valve (1) of one of claims 1 to 4, wherein the sliding valve element (27) connected with the manual bottom or handle (28) comprises a switching piston (30) biased by a spring (31), wherein the effective surface of the switching piston (30) is biased by a pressure in a line (23) of the air suspension (9) leading to the air suspension bellows (24).

6. Parking brake valve (1) of one of claims 1 to 5, wherein the opening valve (33, 34) is located within the sliding valve element (27) and the sliding valve element (27) builds or supports the valve seat (34) of the opening valve (33, 34) and wherein the valve body (33) of valve (33, 34) is guided or beared in the sliding valve element (27) for a sliding movement and sealed.

7. Parking brake valve (1) of one of claims 1 to 6, wherein the switching piston (30) biased by the pressure in the line (23) of the air suspension (9) leading to the air suspension bellows (24) comprises a piston rod (32) which extends through the valve seat (34) of the opening valve (33, 34) and builds, supports or carries the valve body (9) of the opening valve (33, 34).

8. Parking brake valve (1) of at least one of claims 1 to 7, wherein the piston rod (32) comprises a line for bypassing the opening valve (33, 34), wherein in the line a check valve (51) for providing a pressure balance is located.

9. Parking brake valve (1) of at least one of claims 1 to 8, wherein the sliding valve element (27) comprises a protrusion (29) located on the side of the sliding valve element (27) facing towards the emergency brake unit (45), wherein the emergency brake piston (46) is guided on the protrusion (29) for a sliding movement and sealed and wherein the protrusion (29) supports, builds or carries an abutting element or stop element (50) cooperating with the emergency brake piston (46).

10. Parking brake valve (1) of at least one of claims 1 to 9, wherein the protrusion (29) is hollow for the purpose of providing a de-aeration.

## Revendications

1. Soupape de frein de stationnement (1) pour une installation de commande pour des remorques de véhicule dotées d'un frein de service (8) présentant des cylindres de frein de service (12), d'un frein de stationnement (10) présentant des cylindres de frein à accumulateur à ressort (42) et d'une suspension pneumatique (9) présentant des soufflets de coussin d'air (24), d'un boîtier (25), dans lequel un robinet-soupape (27) est disposé et guidé de façon glissante et étanche, lequel présente un bouton manuel (28) guidé à la sortie du boîtier (25), par lequel le robinet-soupape (27) peut coulisser manuellement au choix dans une position de ventilation ou une position de purge des cylindres de frein à accumulateur à ressort (42) du frein de stationnement (10), **caractérisée en ce que** la soupape de frein de stationnement (1) présente dans la conduite (13, 41) allant aux cylindres de frein à accumulateur à ressort (42) une soupape de passage (33, 34), qui peut être commutée par la pression dans la conduite (23), allant aux soufflets de coussin d'air (24), de la suspension pneumatique (9) d'une position de fermeture dans une position de passage.

2. Soupape de frein de stationnement (1) selon la revendication 1, **caractérisée en ce que** la soupape de frein de stationnement (1) présente une unité de freinage de secours (45) avec un piston de frein de secours (46) qui est alimenté par la pression dans la conduite de réserve (3) et soutenu sur un ressort accumulateur (47).

3. Soupape de frein de stationnement (1) selon la revendication 2, **caractérisée en ce qu'**une soupape magnétique (22) peut être disposée dans une conduite de liaison (21) entre la conduite de réserve (3) et le piston de frein de secours (46), laquelle soupape présente une position de passage et une position de blocage.

4. Soupape de frein de stationnement (1) selon au moins l'une des revendications 1 à 3, **caractérisée en ce qu'**un clapet anti-retour (51) shuntant la soupape de passage (33, 34) est prévu, lequel permet un équilibrage de pression dans la conduite (41) allant aux cylindres de frein à accumulateur à ressort (42).

5. Soupape de frein de stationnement (1) selon au moins l'une des revendications 1 à 4, **caractérisée en ce qu'**un piston de commutation (30) soutenu sur un ressort (31) est prévu dans le robinet-soupape (27) relié au bouton manuel (28), piston dont la surface active est alimentée par la pression dans la conduite (23), allant aux soufflets de coussin d'air (24), de la suspension pneumatique (9).

6. Soupape de frein de stationnement (1) selon au moins l'une des revendications 1 à 5, **caractérisée en ce que** la soupape de passage (33, 34) est disposée dans le robinet-soupape (27) et le robinet-soupape (27) porte le siège de soupape (34) de la soupape de passage (33, 34), et **en ce que** le corps de soupape (33) de la soupape de passage (33, 34) est monté dans le robinet-soupape (27) de façon glissante et étanche.

7. Soupape de frein de stationnement (1) selon au moins l'une des revendications 1 à 6, **caractérisée en ce que** le piston de commutation (30) alimenté par la pression dans la conduite (23), allant aux soufflets de coussin d'air (24), de la suspension pneumatique (9) présente une tige de piston (32), qui est guidée à travers le siège (34) de la soupape de passage (33, 34) et porte le corps de soupape (9) de la soupape de passage (33, 34).

8. Soupape de frein de stationnement (1) selon au moins l'une des revendications 1 à 7, **caractérisée en ce que** la tige de piston (32) présente une conduite pour le shuntage de la soupape de passage (33, 34), dans laquelle est disposé un clapet anti-retour (51) permettant l'équilibrage de pression.

9. Soupape de frein de stationnement (1) selon au moins l'une des revendications 1 à 8, **caractérisée en ce que** le robinet-soupape (27) présente sur son côté tourné vers l'unité de frein d'urgence (45) un prolongement (29), sur lequel le piston de frein de secours (46) est guidé de façon glissante et étanche et qui porte une butée (50) coopérant avec le piston de frein de secours (46).

10. Soupape de frein de stationnement (1) selon au moins l'une des revendications 1 à 9, **caractérisée en ce que** le prolongement (29) est conçu creux à des fins de purge.
